# EUROPÄISCHE PATENTSCHRIFT

(11) **EP 3 403 317 B1**
(45) Veröffentlichungstag und Bekanntmachung des Hinweises auf die Patenterteilung: **08.04.2020**
(21) Anmeldenummer: 17705050.7
(22) Anmeldetag: 06.02.2017
(51) Int. Cl.: H02K 1/27, H02K 9/04, H02K 1/30, F04D 29/32, F04D 19/00, F04D 29/58, H02K 9/06

(54) **ROTOR UND ELEKTRISCHE MASCHINE**
ROTOR AND ELECTRICAL MACHINE
ROTOR ET MACHINE ÉLECTRIQUE

(30) Priorität: 23.02.2016 DE 102016202741
(43) Veröffentlichungstag der Anmeldung: 21.11.2018
(73) Patentinhaber: Rolls-Royce Deutschland Ltd & Co KG, 15827 Blankenfelde-Mahlow (DE)
(72) Erfinder: WETZEL, Wolfgang, 91074 Herzogenaurach (DE); MUCHA, Oana, 90453 Nürnberg (DE)
(86) Internationale Anmeldenummer: PCT/EP2017/052538
(87) Internationale Veröffentlichungsnummer: WO 2017/144259

(56) Entgegenhaltungen:
- EP-A1- 1 722 462
- DE-A1- 2 556 824
- DE-A1- 4 107 962
- US-A1- 2006 186 846
- US-A1- 2009 155 076

## Beschreibung

Die Erfindung betrifft einen Rotor nach dem Oberbegriff des Anspruchs 1 und eine elektrische Maschine nach dem Oberbegriff des Anspruchs 9.

Ein Rotor mit Permanentmagneten an einem Außenradius ist ein meridianbeschleunigter Rotor, der, wie nachfolgend wenigstens teilweise vorgenommen, auch als ein Permanentmagnet-Läufer bezeichnet werden kann.

Das Magnetmaterial der Permanentmagnete eines Permanentmagnet-Läufers hat je nach Legierungszusammensetzung eine maximal zulässige Obergrenze als Einsatztemperatur. Wird diese überschritten, kann eine irreversible Entmagnetisierung beim Magnetmaterial auftreten, was die Funktion des Permanentmagnet-Läufers zerstört.

Eine gezielte Luftkühlung des Rotors tritt einer unzulässigen Erwärmung der Läufer-Magnete durch Wirbelstromverluste und Wärmeeintrag beispielsweise über den zugehörigen Stator im Betrieb entgegen.

Je nach der gewählten Art der gezielten Luftkühlung ist die Fertigung des Permanentmagnet-Läufers aufwendiger oder weniger aufwendig und die erzielte Kühlwirkung entweder stärker oder schwächer ausgeprägt.

Allgemein bekannt ist, dass eigenbelüftete Permanentmagnet-Läufer beispielsweise in der Weise aufgebaut sind, dass neben dem eigentlichen Rotor-Aktivteil mit seinen Permanentmagneten ein zusätzlicher Lüfter wie beispielsweise ein Axiallüfter oder ein Radiallüfter mit drückendem oder saugendem Luftstrom als separates Bauteil konzentrisch auf der Welle des Rotors vorgesehen ist. Alternative bekannte Lösungen umfassen einen externen Lüfter zur Erzeugung eines Kühlluftstroms. Diese Lösungen erhöhen die Komplexität und das Gewicht der Gesamtkonstruktion des Rotors beziehungsweise einer damit ausgestatteten elektrischen Maschine nachteilig. So offenbart beispielsweise die EP 1 722 462 A1 eine elektrische Maschine.

Aufgabe der vorliegenden Erfindung ist, einen Rotor der eingangs genannten Art anzugeben, dessen Permanentmagnete im Einsatz sicher mit einer benötigten Kühlung versorgt sind und zwar in einer solchen Weise, dass die Fertigung des Rotors wenig aufwendig und das nachteilige Gewichtszunahmeproblem für die Kühlung gegenüber bekannten Lösungen verbessert ist. Aufgabe der vorliegenden Erfindung ist weiter, eine elektrische Maschine der eingangs genannten Art anzugeben, bei der das Entmagnetisierungsproblem bei den vorhandenen Permanentmagneten für den Rotor wegen zu hoher Temperaturen im Betrieb ohne die Nachteile bekannter Lösungen bezüglich Fertigungskomplexität und Gewicht gelöst ist.

Diese Aufgabe ist bezüglich des Rotors ausgehend von einem Rotor der eingangs genannten Art erfindungsgemäß gelöst durch einen Rotor, der die im Kennzeichen des Anspruchs 1 angegebenen Merkmale aufweist. Diese Aufgabe ist weiter bezüglich der elektrischen Maschine ausgehend von einer elektrischen Maschine der eingangs genannten Art erfindungsgemäß gelöst durch eine elektrische Maschine, die das im Kennzeichen des Anspruchs 9 angegebene Merkmal aufweist.

Der erfindungsgemäße Rotor weist danach an dem Außenradius eine ringförmige Struktur mit darin aufgenommenen Permanentmagneten, an einem Innenradius eine konische Nabenstruktur und zwischen der ringförmigen Struktur und der konischen Nabenstruktur eine Vielzahl von wenigstens rippenförmigen oder schaufelförmigen Strukturen zu einer mechanischen Verbindung von ringförmiger Struktur und konischer Nabenstruktur auf.

Die erfindungsgemäße elektrische Maschine weist danach den oben angegebenen erfindungsgemäßen Rotor auf.

Die erfindungsgemäßen Maßnahmen bewirken sowohl bei einem meridianbeschleunigten Rotor als auch bei einer elektrischen Maschine mit einem solchen Rotor eine wenig aufwendige Fertigung bei sicherer Gewährleistung einer benötigten Kühlung für die Permanentmagnete des meridianbeschleunigten Rotors unter Vermeidung einer Gewichtszunahme wegen Verwendens zusätzlicher, separater Kühlaggregate. Insbesondere werden keine zusätzlichen Lüfter wie beispielsweise ein Axiallüfter oder ein Radiallüfter mit drückendem oder saugendem Luftstrom als separates Bauteil konzentrisch angeordnet auf der Welle des Rotors benötigt. Damit entfallen vorteilhaft die komplexe Fertigung des Rotors und die damit einhergehende Erhöhung des Gesamtgewichts. Mit den erfindungsgemäßen Maßnahmen sind somit vorteilhaft sowohl lüftungs- als auch fertigungstechnische Aspekte positiv beeinflusst.

Erreicht wird dies erfindungsgemäß dadurch, dass eine vorhandene mechanische rotierende Tragestruktur gleichzeitig als ein rotierender Wärmetauscher genutzt wird.

Vorteilhafte Ausgestaltungen der Erfindung sind Gegenstand von Unteransprüchen.

Ringförmige Strukturen sind für einen Rotor die geometrisch günstigste Konstruktionsform.

Eine besonders gute Kühlwirkung wird erzielt, wenn die Vielzahl an Strukturen zwischen der ringförmigen Struktur am Außenradius des Rotors und der an einem Innenradius des Rotors angeordneten konischen Nabenstruktur zu einer mechanischen Verbindung von ringförmiger Struktur am Außenradius des Rotors und konischen Nabenstruktur an einem Innenradius des Rotors als Lüfterschaufeln aus einem gut wärmeleitenden Material wie zum Beispiel Aluminium ausgebildet sind.

Die Kühlwirkung kann weiter durch eine entsprechende Profilierung der Lüfterschaufeln positiv beeinflusst werden.

Plattenförmige Lüfterschaufeln vereinfachen die Fertigung.

Wie die Lüfterschaufeln eines meridianbeschleunigten Axialgebläses ausgebildete Lüfterschaufeln optimieren die damit erzielte Kühlwirkung.

Ist die Vielzahl an Strukturen zwischen der ringförmigen Struktur am Außenradius des Rotors und der an einem Innenradius des Rotors angeordneten konischen Nabenstruktur luftförderungstechnisch optimiert unter Berücksichtigung der dem Rotor innewohnenden Vorzugsdrehrichtung ergibt sich ein maximaler Kühleffekt für zum Beispiel die Permanentmagnete des Rotors.

Ist wenigstens die am Außenradius des Rotors angeordnete ringförmige Struktur zur Aufnahme der Permanentmagnete oder die an einem Innenradius des Rotors angeordnete konische Nabenstruktur oder die zwischen der ringförmigen Struktur am Außenradius des Rotors und der an einem Innenradius des Rotors angeordneten konischen Nabenstruktur angeordnete Vielzahl von Strukturen hohl mit oder ohne einem darin angeordneten, an die thermischen Verhältnisse angepassten Phasenwechsel-Medium ausgebildet, sind einerseits Gewichtseinsparungen und andererseits weiter erhöhte Wärmetransportraten möglich.

Entsprechende vorteilhafte Effekte und vorteilhafte Wirkungen gelten für eine mit einem solchen erfindungsgemäßen Rotor ausgestattete elektrische Maschine.

Nachfolgend werden Ausführungsbeispiele der Erfindung anhand einer Zeichnung näher erläutert. Darin zeigen:
- Figur 1: einen erfindungsgemäßen meridianbeschleunigten Rotor in einer dreidimensionalen perspektivischen Prinzipdarstellung in Vorderansicht,
- Figur 2: den Rotor nach der Figur 1 in Rückansicht,
- Figur 3: einen Längsschnitt des Rotors nach der Figur 1 in Schemadarstellung, und
- Figur 4: einen Längsschnitt des Rotors nach der Figur 1 in einer Ausgestaltung nach dem sogenannten Heat-Pipe-Prinzip in Schemadarstellung.

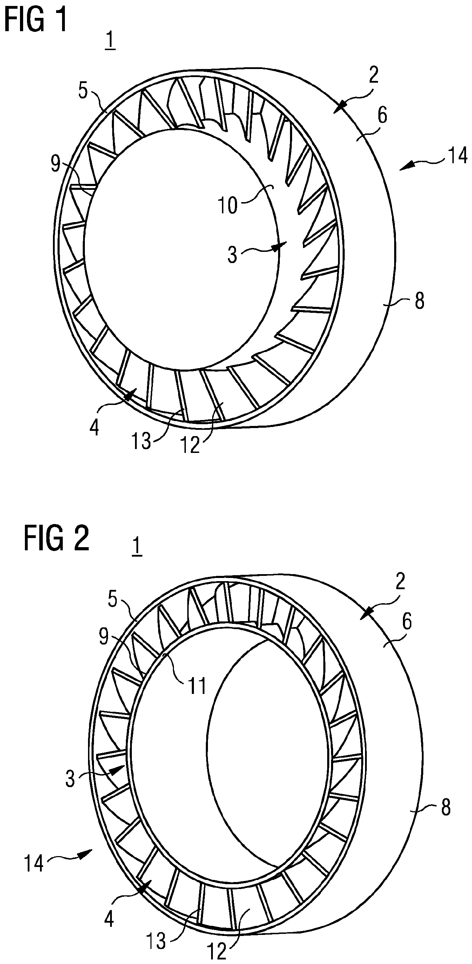

Die Figuren 1 bis 4 werden nachfolgend gleichzeitig beschrieben.

Der Aufbau des erfindungsgemäßen Rotors 1 lässt sich in drei Sektionen 2, 3, 4 gliedern:
In einer ersten Sektion 2 ist auf einem Außenradius 5 des Rotors 1 angeordnet eine ringförmige Struktur 6 zur Aufnahme von in den Figuren 1 und 2 nicht explizit gezeichneten Permanentmagneten 7. Im vorliegenden Ausführungsbeispiel der Erfindung ist diese ringförmige Struktur durch einen Außenring 8 gebildet.

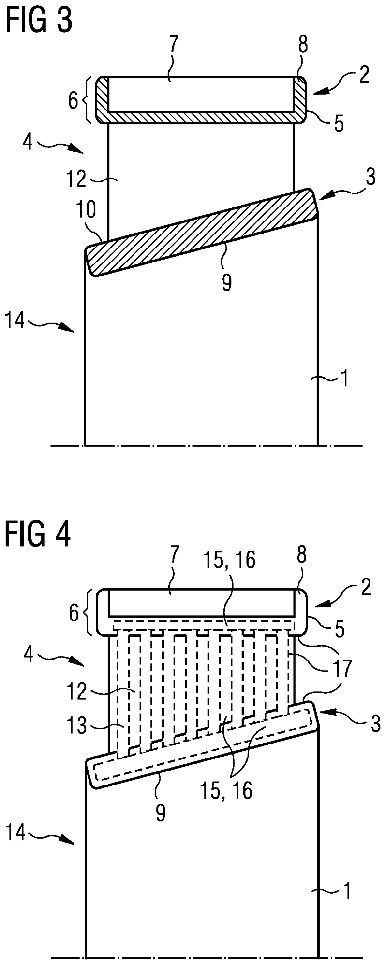

In einer zweiten Sektion 3 ist auf einem Innenradius 9 eine konische Nabenstruktur 10 (Figur 1, 3) angeordnet. Im vorliegenden Ausführungsbeispiel der Erfindung ist die konische Nabenstruktur 10 durch einen konischen Innenring 11 (Figur 2) gebildet.

In einer dritten Sektion 4 zwischen dem Außen- und dem Innenring 8, 11 sind eine Vielzahl von rippenbeziehungsweise schaufelförmigen Strukturen 12 zur mechanischen Verbindung von Außen- und Innenring 8, 11 angeordnet. Im vorliegenden Ausführungsbeispiel der Erfindung sind diese Strukturen 12 durch Lüfterschaufel 13 gebildet, das heißt, die mechanischen Verbindungsstrukturen sind an geeigneter Stelle gleichzeitig dazu genutzt, nicht nur für den mechanischen Zusammenhalt der mechanischen Konstruktionsteile zu sorgen, sondern auch gleich für die Verbesserung der Verlustwärmeabfuhr.

Aufgrund der Ausbildung des Rotors 1 mit den genannten drei Sektionen ist zwischen der ringförmigen Struktur 6 und der konischen Nabenstruktur 10 ein Schaufelkanal ausgebildet, der bei einer Drehung des Rotors 1 in seiner zugeordneten Vorzugsdrehrichtung von Umgebungsluft durchströmt ist. Die äußere Begrenzung des durchströmten Schaufelkanals ist zylindrisch ausgebildet, das heißt sie weist einen konstanten Durchmesser auf. Die konusförmige Nabe weist einen in axialer Richtung zunehmenden Durchmesser auf.

Bei zylindrischer Außenbegrenzung ergibt sich für den Fall, dass die Relativgeschwindigkeiten w₁ und w₂ im Ein- und Austritt gleich sind, w₁ = w₂, ein Gleichdruck für die äußere Stromlinie, das heißt, der Rotor 1 erzeugt nur kinetische Energie. Die nabennäheren Stromlinien sind entsprechend stärker beschleunigt. Daher wird der hier beschriebene Rotor 1 "meridianbeschleunigt" genannt.

Die Vorteile dieser Formgebung bestehen darin, dass der Wärmeübergang in den Schaufelkanälen maximiert wird, ebenso kann auf die Profilierung der Lüfterschaufeln verzichtet werden.

Eine Verlustleistung des Rotors 1 wird durch Wärmeleitung vom Außenring 8 in die Lüfterschaufeln 13 und, zu einem geringeren Teil, in den Innenring 11 geleitet. Durch die Form der Lüfterschaufeln 13 wird bei rotierendem Permanentmagnet-Läufer, wie der Rotor 1 auch genannt werden kann, wie eingangs erwähnt, Kühlluft von einer Ansaug- zu einer Ausblasseite gefördert.

Ein Rotor 1, wie er in den Figuren 1 bis 4 gezeigt ist, ist, wie erwähnt, ein meridianbeschleunigter Rotor 1. Er läuft um einen Stator 14 (in den Figuren 1 bis 4 nur angedeutet). Der Rotor 1 ist ein meridianbeschleunigter Rotor 1, weil die Stromlinien des durchströmenden Mediums nabennäher im stärker beschleunigt sind. Solche Rotoren 1 haben eine Vorzugsdrehrichtung.

Eine vorteilhafte Ausführungsform für eine solche Vorzugsdrehrichtung ist die eines meridianbeschleunigten Axialgebläses mit nicht verzögerter Relativgeschwindigkeit der Strömung in den Schaufelkanälen, w₁ = w₂. Dadurch kann die Profilierung der Lüfterschaufeln 13 entfallen.

Im rotierenden Bezugssystem stellt sich eine Relativgeschwindigkeit zwischen Lüfterschaufeln 13 und geförderter Luft ein. Da die Lüfterschaufeln 13 gleichzeitig als Rippen eines hier jetzt wirkenden Plattenwärmetauschers beziehungsweise rotierenden Plattenwärmetauschers dienen, wird die Verlustwärme des Rotors 1, weil eine große Oberfläche und eine hohe Relativgeschwindigkeit gegeben sind, effektiv konvektiv an die geförderte Luft beziehungsweise das umgebende Fluid abgegeben.

Eine weitere Optimierung des Wärmeübertragungs- bzw. Kühlvermögens des Rotors 1 besteht darin, die inneren Strukturen 15 von Außen- und Innenring 8, 11 sowie der Lüfterschaufeln 13 nicht massiv sondern hohl auszuführen. In diese inneren Strukturen 15 kann ein Phasenwechsel-Medium 16 eingebracht sein, das über den Phasenübergang flüssiggasförmig den Wärmetransport von den heißen Permanentmagneten 7 als Wärmequelle (Verdampfung) hin zu den gut gekühlten Oberflächen 17 der Lüfterschaufeln 13 und des Außen- und Innenrings 8, 11 (Kondensation) verbessert. Dieses Wärmetauscherprinzip ist auch unter dem Namen "Heat-Pipe-Prinzip" bekannt. Die hierbei wirkenden Fliehkräfte verstärken diesen Effekt zusätzlich.

Insgesamt zeigen die Figuren 1 bis 4 einen erfindungsgemäßen Rotor 1 beziehungsweise einen erfindungsgemäßen Permanentmagnet-Läufer, bei dem seine aerodynamisch optimierte Tragstruktur gleichzeitig als rotierender Plattenwärmetauscher dient. Die Formgebung von Außen- und Innenring 8, 11 sowie der sie verbindenden Lüfterschaufeln 13 ist in einer solchen Weise konstruiert, dass sie an die speziellen Erfordernisse einer effektiven Läuferkühlung angepasst ist und zwar insbesondere in der Weise, dass eine ablösungsfreie, axiale Anströmung der Läuferkühlkanäle im rotierenden Bezugssystem gegeben ist. Im Ergebnis liegt eine verbesserte Kühlwirkung bei niedriger Lärmentwicklung vor. Durch die erzielten Strömungsverhältnisse in den Schaufelkanälen des Rotors 1 ist ein sehr effektiver Materialeinsatz erreicht, das heißt, das Verhältnis der abgeführten Verlustleistung zur Masse des Läufers ist günstig. Bei Umsetzung des sogenannten Heat-Pipe-Prinzips ist die Effektivität der Kühlung zusätzlich gesteigert.

Bei Einsatz eines solchen erfindungsgemäßen Rotors 1 in entsprechenden elektrischen Maschinen ist die Leistungsdichte der betreffenden elektrischen Maschine vorteilhaft erhöht.

## Patentansprüche

1. Rotor (1) mit einer Vorzugsdrehrichtung und Permanentmagneten (7) an einem Außenradius (5) des Rotors (1), wobei
- an dem Außenradius (5) eine ringförmige Struktur (6) angeordnet ist, in der die Permanentmagnete (7) montiert sind, **dadurch gekennzeichnet dass**
- an einem Innenradius (9) des Rotors (1) eine konische Nabenstruktur (10) angeordnet ist, die als ein konischer Innenring (11) ausgebildet ist und die einen in axialer Richtung zunehmenden Durchmesser aufweist, und
- zwischen der ringförmigen Struktur (6) und der konischen Nabenstruktur (10) eine Vielzahl von wenigstens rippenförmigen oder schaufelförmigen Strukturen (12) zu einer mechanischen Verbindung von ringförmiger Struktur (6) und konischer Nabenstruktur (10) vorgesehen sind, um einen Schaufelkanal auszubilden, der bei einer Drehung des Rotors (1) in seiner zugeordneten Vorzugsdrehrichtung von Umgebungsluft durchströmt ist, wobei eine äußere Begrenzung des durchströmten Schaufelkanals zylindrisch ausgebildet ist und einen konstanten Durchmesser aufweist.

2. Rotor (1) nach Anspruch 1, **dadurch gekennzeichnet dass**
- die ringförmige Struktur (6) am Außenradius (5) des Rotors (1) als ein Außenring (8) ausgebildet ist.

3. Rotor (1) nach einem der Ansprüche 1 bis 2, **dadurch gekennzeichnet dass**
- die Vielzahl an Strukturen zwischen der ringförmigen Struktur (6) am Außenradius (5) des Rotors (1) und der an einem Innenradius (9) des Rotors (1) angeordneten konischen Nabenstruktur (10) als Lüfterschaufeln (13) ausgebildet sind.

4. Rotor (1) nach einem der Ansprüche 1 bis 3, **dadurch gekennzeichnet dass**
- die Vielzahl an Strukturen zwischen der ringförmigen Struktur (6) am Außenradius (5) des Rotors (1) und der an einem Innenradius (9) des Rotors (1) angeordneten konischen Nabenstruktur (10) als unprofilierte oder profilierte Lüfterschaufeln (13) ausgebildet sind.

5. Rotor (1) nach einem der Ansprüche 1 bis 4, **dadurch gekennzeichnet dass**
- die Vielzahl an Strukturen zwischen der ringförmigen Struktur (6) am Außenradius (5) des Rotors (1) und der an einem Innenradius (9) des Rotors (1) angeordneten konischen Nabenstruktur (10) als plattenförmige Lüfterschaufeln (13) ausgebildet sind.

6. Rotor (1) nach einem der Ansprüche 1 bis 5, **dadurch gekennzeichnet dass**
- die Vielzahl an Strukturen zwischen der ringförmigen Struktur (6) am Außenradius (5) des Rotors (1) und der an einem Innenradius (9) des Rotors (1) angeordneten konischen Nabenstruktur (10) als profilierte Lüfterschaufeln (13) wie die Lüfterschaufeln eines meridianbeschleunigten Axialgebläses ausgebildet sind.

7. Rotor (1) nach einem der Ansprüche 1 bis 6, **dadurch gekennzeichnet dass**
- die Vielzahl an Strukturen zwischen der ringförmigen Struktur (6) am Außenradius (5) des Rotors (1) und der an einem Innenradius (9) des Rotors (1) angeordneten konischen Nabenstruktur (10) blasoptimiert bezüglich der Vorzugsdrehrichtung des Rotors (1) ausgebildet sind.

8. Rotor (1) nach einem der Ansprüche 1 bis 7, **dadurch gekennzeichnet dass**
- wenigstens die am Außenradius (5) des Rotors (1) angeordnete ringförmige Struktur (6) zur Aufnahme der Permanentmagnete (7) oder die an einem Innenradius (9) des Rotors (1) angeordnete konische Nabenstruktur (10) oder die zwischen der ringförmigen Struktur (6) am Außenradius (5) des Rotors (1) und der an einem Innenradius (9) des Rotors (1) angeordneten konischen Nabenstruktur (10) angeordnete Vielzahl von Strukturen hohl mit oder ohne einem darin angeordneten besonderen wärmeleitenden Phasenwechsel-Mediums (16) ausgebildet sind.

9. Elektrische Maschine in einer Ausbildung als ein meridianbeschleunigtes Axialgebläse mit einem Rotor (1) mit Permanentmagneten (7) an einem Außenradius (5) des Rotors (1) und einem zugehörigen Stator (14), **dadurch gekennzeichnet dass**
- der Rotor (1) nach einem der vorhergehenden Ansprüche ausgebildet ist.

## Claims

1. Rotor (1) having a preferred direction of rotation and permanent magnets (7) at an outer radius (5) of the rotor (1), wherein
- an annular structure (6), in which the permanent magnets (7) are mounted, is arranged at the outer radius (5), **characterized in that**
- a conical hub structure (10) is arranged at an inner radius (9) of the rotor (1), is designed as a conical inner ring (11), and has a diameter that increases in the axial direction, and
- a multiplicity of at least rib-shaped or blade-shaped structures (12) for mechanically connecting the annular structure (6) and the conical hub structure (10) are provided between the annular structure (6) and the conical hub structure (10) in order to form a blade duct through which ambient air flows when the rotor (1) rotates in its assigned preferred direction of rotation, wherein an outer boundary of the flowed-through blade duct is cylindrical and has a constant diameter.

2. Rotor (1) according to Claim 1, **characterized in that**
- the annular structure (6) at the outer radius (5) of the rotor (1) is designed as an outer ring (8).

3. Rotor (1) according to one of Claims 1 to 2, **characterized in that**
- the multiplicity of structures between the annular structure (6) at the outer radius (5) of the rotor (1) and the conical hub structure (10) arranged at an inner radius (9) of the rotor (1) are designed as fan blades (13).

4. Rotor (1) according to one of Claims 1 to 3, **characterized in that**
- the multiplicity of structures between the annular structure (6) at the outer radius (5) of the rotor (1) and the conical hub structure (10) arranged at an inner radius (9) of the rotor (1) are designed as non-profiled or profiled fan blades (13).

5. Rotor (1) according to one of Claims 1 to 4, **characterized in that**
- the multiplicity of structures between the annular structure (6) at the outer radius (5) of the rotor (1) and the conical hub structure (10) arranged at an inner radius (9) of the rotor (1) are designed as planar fan blades (13).

6. Rotor (1) according to one of Claims 1 to 5, **characterized in that**
- the multiplicity of structures between the annular structure (6) at the outer radius (5) of the rotor (1) and the conical hub structure (10) arranged at an inner radius (9) of the rotor (1) are designed as profiled fan blades (13) such as the fan blades of a meridian-accelerated axial blower.

7. Rotor (1) according to one of Claims 1 to 6, **characterized in that**
- the multiplicity of structures between the annular structure (6) at the outer radius (5) of the rotor (1) and the conical hub structure (10) arranged at an inner radius (9) of the rotor (1) are designed so as to be optimized for the blower with respect to the preferred direction of rotation of the rotor (1).

8. Rotor (1) according to one of Claims 1 to 7, **characterized in that**
- at least the annular structure (6) arranged at the outer radius (5) of the rotor (1) for receiving the permanent magnets (7), or the conical hub structure (10) arranged at an inner radius (9) of the rotor (1), or the multiplicity of structures arranged between the annular structure (6) at the outer radius (5) of the rotor (1) and the conical hub structure (10) arranged at an inner radius (9) of the rotor (1), is/are hollow, with or without a particular heat-conducting phase-change medium (16) arranged therein.

9. Electrical machine designed as a meridian-accelerated axial blower having a rotor (1) with permanent magnets (7) at an outer radius (5) of the rotor (1) and an associated stator (14), **characterized in that**
- the rotor (1) is formed according to one of the preceding claims.

## Revendications

1. Rotor (1) présentant un sens de rotation préférentiel et comportant des aimants permanents (7) au niveau d'un rayon externe (5) du rotor (1), dans lequel
- une structure annulaire (6) dans laquelle les aimants permanents (7) sont montés est située au niveau du rayon externe (5), **caractérisé en ce que**
- une structure formant moyeu conique (10) qui est conçue en tant que bague intérieure conique (11) et qui présente un diamètre croissant dans la direction axiale est située au niveau d'un rayon interne (9) du rotor (1), et
- une pluralité de structures (12) ayant au moins la forme de nervures ou d'ailettes est prévue entre la structure annulaire (6) et la structure formant moyeu conique (10), formant une liaison mécanique entre la structure annulaire (6) et la structure formant moyeu conique (10), pour constituer un canal d'ailettes qui est traversé par l'air ambiant lors d'une rotation du rotor (1) dans son sens de rotation préférentiel attribué, une limitation extérieure du canal d'ailettes traversé par l'air étant de forme cylindrique et présentant un diamètre constant.

2. Rotor (1) selon la revendication 1, **caractérisé en ce que**
- la structure annulaire (6) au niveau du rayon externe (5) du rotor (1) est conçue en tant que bague extérieure (8) .

3. Rotor (1) selon l'une des revendications 1 à 2, **caractérisé en ce que**
- la pluralité de structures entre la structure annulaire (6) au niveau du rayon externe (5) du rotor (1) et la structure formant moyeu conique (10) située au niveau d'un rayon interne (9) du rotor (1) est conçue en tant qu'ailettes de ventilateur (13).

4. Rotor (1) selon l'une des revendications 1 à 3, **caractérisé en ce que**
- la pluralité de structures entre la structure annulaire (6) au niveau du rayon externe (5) du rotor (1) et la structure formant moyeu conique (10) au niveau d'un rayon interne (9) du rotor (1) est conçue en tant qu'ailettes de ventilateur (13) non profilées ou profilées.

5. Rotor (1) selon l'une des revendications 1 à 4, **caractérisé en ce que**
- la pluralité de structures entre la structure annulaire (6) au niveau du rayon externe (5) du rotor (1) et la structure formant moyeu conique (10) située au niveau d'un rayon interne (9) du rotor (1) est conçue en tant qu'ailettes de ventilateur (13) en forme de plaques.

6. Rotor (1) selon l'une des revendications 1 à 5, **caractérisé en ce que**
- la pluralité de structures entre la structure annulaire (6) au niveau du rayon externe (5) du rotor (1) et la structure formant moyeu conique (10) située au niveau d'un rayon interne (9) du rotor (1) est conçue en tant qu'ailettes de ventilateur (13) profilées, telles les ailettes de ventilateur d'une soufflante axiale à accélération méridienne.

7. Rotor (1) selon l'une des revendications 1 à 6, **caractérisé en ce que**
- la pluralité de structures entre la structure annulaire (6) au niveau du rayon externe (5) du rotor (1) et la structure formant moyeu conique (10) située au niveau d'un rayon interne (9) du rotor (1) est conçue d'une manière optimisant le soufflage par rapport au sens de rotation préférentiel du rotor (1).

8. Rotor (1) selon l'une des revendications 1 à 7, **caractérisé en ce que**
- au moins la structure annulaire (6) située au niveau du rayon externe (5) du rotor (1), destinée à recevoir les aimants permanents (7), ou la structure formant moyeu conique (10) située au niveau d'un rayon interne (9) du rotor (1), ou la pluralité de structures située entre la structure annulaire (6) au niveau du rayon externe (5) du rotor (1) et la structure formant moyeu conique (10) située au niveau d'un rayon interne (9) du rotor (1), est/sont conçue/s creuse/s avec ou sans milieu à changement de phase thermoconducteur (16) particulier à l'intérieur.

9. Machine électrique exécutée en tant que soufflante axiale à accélération méridienne comprenant un rotor (1) pourvu d'aimants permanents (7) au niveau d'un rayon externe (5) du rotor (1), et un stator (14) associé, **caractérisé en ce que**
- le rotor (1) est conçu selon l'une des revendications précédentes.
